# EUROPEAN PATENT APPLICATION

(11) **EP 1 589 759 A2**
(43) Date of publication of application: **26.10.2005**
(21) Application number: 05008276.7
(22) Date of filing: 15.04.2005
(51) Int. Cl.: H04N 7/167

(54) **Methods of broadcasting and reception of radio or television data, and also transmitter and receiver for implementing of these methods**

(30) Priority: 19.04.2004 PL 36737704
(71) Applicant: Advanced Digital Broadcast Polska Sp. zo.o., 65-119 Zielona Gora (PL)
(72) Inventor: Dabrowa, Andrzej, 65-012 Zielona Gora (PL)
(74) Representative: Passowicz, Marek

(57) **Abstract**

According to broadcasting method by invention, the errors inserted in the transmitter in the data are sent to the receivers via the first transmission channel and at the same time there is information created that determines a correction method of the inserted errors, and afterwards, this information is sent to the receivers via the second transmission channel.

Reception's method of radio or television data consists in that in the receiver, the data stream, which contains errors, is received via the first transmission channel and at the same time information is received, defining the correction method of the inserted errors via the second transmission channel.

The next subject-matters of the invention are a transmitter containing a unit (104) of encoders (103a, 103b, 103c) multiplexer (106) or generator (105) of the PSI data and receiver (110) of radio or television data.

## Description

Subject-maters of an invention are methods for securing transmission, broadcast and reception of radio or television data. Moreover, the next subject-matters of the invention are a transmitter of radio or television data, and a receiver of such data.

### The state of the art

A solution entitled "Copy protection for computer discs"; known from the US patent no. 4,849,836, presents a method of protecting discs for computers (CD-R for example) against copying and unauthorized data readout. False or ambiguous information is purposefully inserted in the data carrier. When such information is read from the disc, they can be interpreted by the system in different ways. Protection according to '836 cannot be copied to another disc, because is such case, it would not contain false or ambiguous elements of the source data carrier.

Therefore, an important feature of the above solution is a purposeful insertion of errors, but use of this method is not applicable to transmission of radio or television signals.

Another solution according to a European patent application no. 1 032 195, entitled: "Method and apparatus for the reproduction of digital data streams" presents a method, where values of PID identifiers are changed after a data stream is recorded on the disc and before it is read from the disc for the first time.

The presented method is not related to problems connected with protection against unauthorized access to audio/video material and it is applicable in PVR type devices (Personal Video Recorder). Moreover, it is used only in A/V data stored in the receiver. Even though this method allows to modify the description of the stream, contained for example in PAT, PMT tables, it unfavorably facilitates reproduction of streams, because data with changed values of PID identifiers are passed directly to a demultiplexer, which does not have to analyze the PAT and PMT tables in order to set values of filters, because the values of the PID identifier numbers are known in advance.

In turn, a European patent application no. 1 337 112, entitled: "Process for transmitting digital television signals for multi-frequency terrestrial digital networks (DVB-T)" refers to a method, according to which data transmitted in the DVB-T standard, are converted and sent via a satellite channel according to the DVB-S standard. Such transmission requires a change of certain table identifiers in audio/video stream.

In the method, according to the above application, tables' identifiers are changed in order to avoid conflicts with other sources of audio/video signal. At the same time, correct data are sent via the same transmission channel. This solution, used for sending DVB-T data in a DVB-S channel, does not protect the stream against an unauthorized readout.

### The essence of the invention

The essence of securing transmission, according to the invention, consists in that errors are inserted in the data, sent via the first transmission channel, while information determining the correction method of inserted errors is sent via the second, additional transmission channel.

The essence of the transmission method, according to the invention, consists in that errors are inserted in the transmitter, in the data sent to receivers by means of the first transmission channel and at the same time information determining the correction method of the inserted errors is generated. Afterwards, this information is sent to receivers via the second transmission channel.

Moreover, it is favorable when:
- information that determines the correction method of the inserted errors is additionally scrambled;
- information, which determines the correction method of the inserted errors, is sent in the first, physical transmission channel via an additional logical channel;
- information that determines the correction method of the inserted errors is sent via a separate, physically independent transmission channel;
- false PSI data are inserted in the data, sent via the first transmission channel;
- PSI data, where errors are inserted, constitute PAT and PMT tables;
- False PID identification numbers of PMT tables are inserted in PAT tables;
- False PID identification numbers of elementary streams connected with a given PMT table are inserted in PMT tables;
- In the transmitter, there is information generated that determines a correction method of the inserted errors with a time limited validity;
- In the transmitter, there is information generated that determines a correction method of inserted errors together with a description of the method of assigning the PID identification numbers;
- In the transmitter, there is information generated that determines a correction method of the inserted errors, containing additionally information about a need of correcting all the PID identification numbers that were changed, by performing an indicated mathematical operation, using the quoted value;
- In the transmitter, there is information generated that determines a correction method of the inserted errors, containing information about a need of correcting all the PID identification numbers that were changed by performing the indicated method, which is available in the programmed receiver;
- In case of no access to the second channel or a wrong reception of data from this channel, there is a correction made of data from the stream, sent via the first channel, using information, earlier written in the storage, that describes a correction method;
- Information, describing correction of data with a limited time of validity is received from the stream sent via the second channel;
- Scrambled information, describing correction of the received data, is received from the stream sent via the second channel;
- PSI data are corrected in the receiver;
- PSI data corrected in the receiver constitute PAT and PMT tables;
- PSI data corrected in the receiver constitute PID identification numbers of PMT tables in the PAT table;
- PSI data corrected in the receiver constitute the PID identification numbers of the elementary streams connected with a given PMT table.
The essence of the reception method according to the invention consists in that the data stream that contains errors is received in the receiver via the first transmission channel and at the same time information that determines the correction method of the inserted errors is received via the second transmission channel.

Moreover, it is favorable when:
- in case of no access of the receiver to the second channel or false data reception from this channel, there is a correction performed of the data of the stream, sent via the first channel, with the use of information, earlier stored in the memory that determines the correction method;
- from the second channel the scrambled information is received that contains the correction method of data received via the first channel;
- information, which determines the correction method of data with a limited validity time, is received from the second channel;
- PSI data are corrected in the receiver;
- PSI data, corrected in the receiver, constitute PAT and PMT tables;
- PSI data, corrected in the receiver, constitute PID identification numbers of PMT tables in the PAT table;
- PSI data, corrected in the receiver, constitute PID identification numbers of the elementary streams, connected with the given PMT table.

The essence of the transmitter, according to the invention, consists in that besides the unit of encoders, the multiplexer and the PSI generator, the transmitter is equipped also with a PID server unit, in which the block generating false PID identification numbers is linked to the block for communication with the PSI data generator. On the other hand, the second output of the PID server unit is linked, by means of a block for creating information describing the method of inserted errors correction, with a block passing data via the second channel, while the output of the communication block is linked to the input of the PSI generator block. The output of the latter is linked to the first control input of the multiplexer, while the output of the block for communication is linked, by means of a logical channel, to the second control input of the multiplexer.

Moreover, it is favorable when:
- the PID server has two additional outputs, one of which is linked to the inputs of the digital encoders and/or the input of the multiplexer, while the second additional output of the PID server unit is linked to the receiver by means of a separate channel;
- the block creating information, which describes a correction method of the inserted errors, is additionally equipped with the encoder of this method.

The essence of the receiver, according to the invention, consists in that its input are two signal receiving blocks, the first of which is designated to receive radio or television data, containing errors that are sent via the first transmission channel, while the other one is designated to receive signal that is sent via the second transmission channel, which determines the correction method for data received by the first signal receiving block. At the same time this block is linked by means of blocks of the controller and data correction to the input of the signal processing block, while the second signal receiving block is linked by means of the correction method analysis block to the second input of data correction block. Furthermore, the controller block is linked to the second inputs of the signal receiving blocks and to the second input of correction method analysis block.

It is also favorable, when a descrambling block is incorporated additionally between the second signal receiving block and the data correction method analysis block, with a controller block linked also to the second input of such descrambling block.

In the solutions according to the invention, there is a modification made of the PSI data, inserted in the stream at the broadcaster of audio/video data. There are programs, correcting the inserted errors that function in the receivers of these data, with the use of data determining the data correction method. These data are sent to receivers by means of an additional transmission channel, for example in the DOCSIS system. Protection of data sent in the transmission channel is a favorable effect of the proposed solutions.

The next advantage of the presented method is a possibility of frequent changes of information about types of errors that are inserted in the broadcasting system and information, which determines the method of their correction. Data, that allow correct reception of the stream, can be changed, for example, once a day. The method of scrambling these data can also be changed.

### Example

This system consists of two paths of data transmission. The first of these two is a transmission channel that sends audio/video data for example in MPEG format, which contain errors, inserted purposefully in the description of their PSI (Program Specific Information). The description of the method of errors' correction in PSI data is sent via a physically or logically separate channel. Thanks to that, correct audio/video information can be received only by receivers, linked to the first and the second transmission channel, which have internal blocks facilitating reception, analysis and application of the required correction method.

The PID identification numbers, according to the MPEG standard, under which the receiver can find packets in the transport stream of audio/video data, are sent as a part of data in the form of tables. For example, the PAT table determines the number of channels in the stream and determines assignment of PID identification numbers to the PMT table for every program. In turn, the PMT table contains a list of PID identification numbers of elementary streams, being for example connected with the audio/video data streams, teletext or DVB-subtitle data stream.

When the transmitted data, for example data of PAT tables (Program Association Table) and/or PMT (Program Map Table), are modified in the transmitter, there are errors inserted in them, that is wrong values of the PID identification numbers (Packet Identifiers), so that they indicate PID identification numbers, which do not exist in the stream. Information as to what is the algorithm of the correct data readout (e.g. a value that should be added to the received value in order to obtain the correct PID number) is sent via another transmission channel than data of radio or television channels, for example via a DOCSIS modem. At the same time, if the system uses a physically separate second transmission channel, the first transmission channel is a satellite or terrestrial signal. In case of logical second transmission channel, information about the correction method of the received data, can be sent for example according to the EMM standard (entitlement management messages), in one transport stream together with the data of radio or television channels. Introduction of scrambling can be the additional element.

According to the invention, the system requires modification of the transmitter of audio/video signal. The following required modifications of the existing systems known from the state of the art: a change of the setting of the PSI table generator, introduction of a connection of the PSI generator with the server, which determines which PID numbers should be inserted in the tables. Moreover, the server of the second, physical or logical, transmission channel must provide the service of sending information about the method of finding the right PID numbers. However, the logic of reception and use of these data should be added in the receivers.

The inventions will be approximated on the basis of the exemplary embodiment, shown in the drawing, with the separate figures that demonstrate:

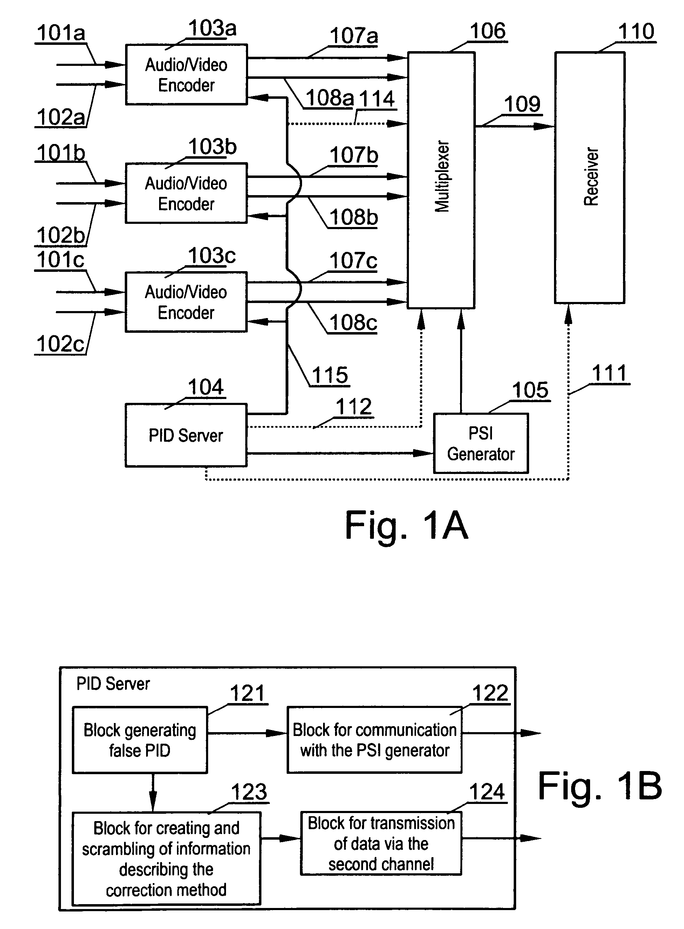

- **Fig. 1A -** a transmitter of audio/video data;
- **Fig. 1B - a** PID server unit;
- **Fig. 1C - a** receiver of audio/video data;
- **Fig. 2 - a** method of identifiers modification in the transmitter;
- **Fig. 3 -** the first method of identifiers modification in the receiver;
- **Fig. 4 -** the second method of identifiers modification in the receiver;
- **Fig. 5A, Fig. 5B and Fig 5C -** formats of packets determining the method of data correction.

In comparison to the state of the art, the transmitter was additionally equipped with the unit 104 of the PID identification numbers server and a separate channel 111 for transmission of information about a correction method of the received data.

The unit 104 of the PID server, in which the block 121, generating wrong PID identification numbers is linked to the block 122 of communication with the PSI data generator, while the second output of the unit 104 is linked, by means of the block 123, creating information that describes the correction method of the inserted errors, to the block 124 sending data via the second channel. The output of the block 122 of communication with the PSI data generator is linked to the input of the block 105 of the PSI data generator, the output of which is linked to the first control input of the multiplexer 106, while the output of the block 124, sending data via the second channel, is linked by means of the logical channel 112 to the second control input of the multiplexer 106.

The unit 104 of the PID server has two additional outputs, one of which is linked, by means of channel 115, to the digital inputs of encoders 103a, 103b, 103c, and/or to the input of the multiplexer 106 via an additional channel 114. However, the second additional output of the block 104 is linked, via a separate channel 111, to the receiver 110. The block 123 creating information, which describes the correction method for inserted errors, is additionally equipped with the encoder of this method.

The process of creating audio/video signal according to the invention starts from delivery of analogue audio signals 101a, 101b, 101c, and video signals 102a, 102b, 102c to audio/video encoders 103a, 103b, 103c. The task of the encoders is to create digital audio streams 107a, 107b, 107c and digital video streams 108a, 108b, 108c. Additionally, depending on the applied broadcasting system, they can receive information 115 from the unit 104 of the PID server, defining, which PID numbers should be applied in the process of encoding of the digital signal. The PID numbers can also be sent via channel 114 directly to the multiplexer 106*.* At the outputs of the encoders 103a, 103b, 103c, digital data streams 107 and 108 are available. These data streams 107 and 108 are passed to multiplexer 106.

The unit 104 of the PID server controls also the PSI data generator 105, which passes information about the content of the stream to the multiplexer 106. In turn, this information will be coupled with the digital stream 109. Insertion of modification to PSI information, which describes the output stream, is performed in the unit 104. Additionally, a task of the unit 104 is to create, scramble and send information, which facilitates faultless reception of the audio/video stream 109, which is sent to the receivers 110. These data are sent via a separate logical channel 112 in the stream 109 or via a separate physical channel 111.

The input of the receiver 110 is composed of two signal receiving blocks, the first of which 132 is assigned to receive audio/video signal 130, containing errors, sent via the first transmission channel, while the other one 133 is assigned to receive the signal 131, send via the second transmission channel. This signal determines the correction method of the signal received from the first block 132, while this block is linked by means of the blocks of the controller 134 and data correction 137 to the input of the signal processing block 138, while the second block 133 is linked by means of the correction method analysis block 136 to the second input of the data correction block 137, and moreover the controller block 134 is linked to the second inputs of the signal 130 and 131 receiving blocks 132 and 133 and to the second input of correction method analysis block 136. The controller 134 is fulfilled by means of software or as a separate electronic circuit, the task of which is to receive information that enables correct reception of the audio/video signal stream 130 and television or radio channels contained in this stream.

Additionally, there is a descrambling block 135 incorporated in between the second signal receiving block 133 and the data correction analysis block 136. A controller block 134 is also linked to the second input of the said descrambling block 135.

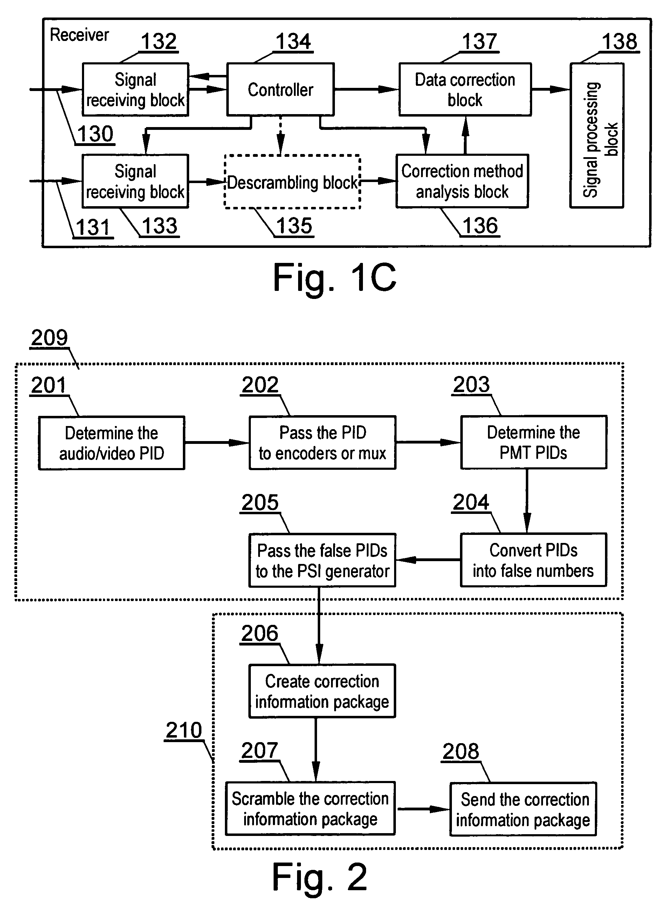

Fig. 2 illustrates a method of creating false information, about the content of the audio/video signal stream, in the transmitter and a method of sending information that enables correct reception of the audio/video stream in the receivers 110. The procedure starts in the point 201 from defining the PID identification numbers for audio/video data and other components of the stream, if they are required by a given broadcaster. Next, in the step 202 of the procedure, these numbers are passed to specific devices, for example, encoders 103 or a multiplexer 106. Next, in point 203 of the procedure, PID identification numbers are determined for description of data contained in the audio/video stream. For example, these are numbers of the PMT tables. The next step 204 is to create the false PID identification numbers with the use of the conversion algorithm. This algorithm can change during operation of the system. The false PID identification numbers are passed to the block 105 of the PSI data generator in the step 205 of the procedure.

There is also a possibility that points from 201 to 205 are fulfilled by one process 209 in the unit 104 of the PID server, while steps 206 to 208 - by a separate process 210 of the server.

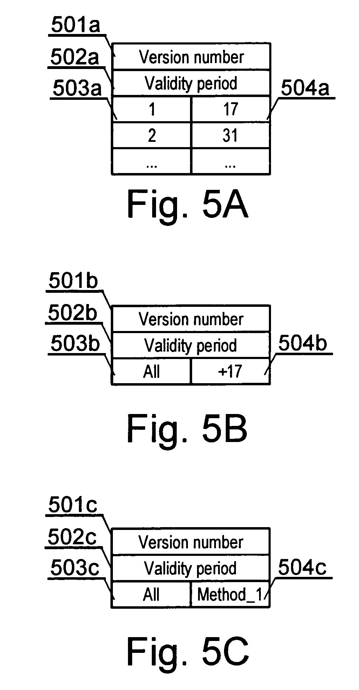

The next task 206 is to create the information packet that would determine a correction method of false data sent in the audio/video signal stream 130. Such packet is created on the basis of the PID identification numbers and the false PID identification numbers, inserted in the stream. Additionally, this packet contains a number of the version and information about a time limit, when the said version is valid. Because the packet is scrambled, it can contain direct mapping of the false PID numbers to the correct ones, or in order to increase the security level, it can determine only the method of obtaining the correct value for every PID identification number. The method can be defined, for example, by stating the number of the method, which is supposed to be used by the receiver to obtain the correct data. The examples of embodiments of the information packets, defining the correction method of false data, sent via the audio/video stream, are presented in Fig. 5A, Fig. 5B and Fig. 5C. In the step 207 of the procedure, these data are scrambled before they are sent in point 208.

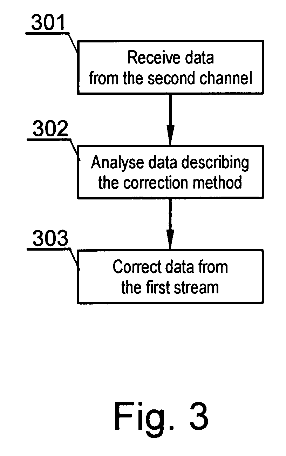

A possible embodiment of the method of identifiers modification in the receiver is presented in Fig. 3. This method starts with receiving information from the second channel. This information describes the correction method of data of the stream, sent via the first channel 301. The next stage, 302, is to analyze this information and on its basis to make a correction 303 of the data received from the stream, sent via the first transmission channel.

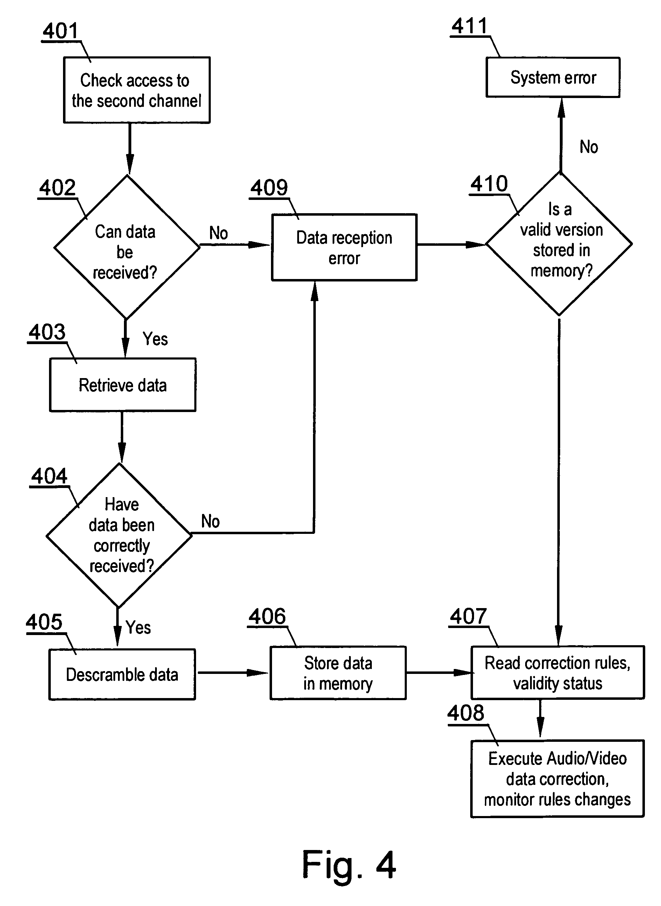

Fig. 4 presents the next embodiment of the correction method of information about the content of the audio/video stream. The procedure starts at the point 401 from checking if the receiver has access to the second data transmission channel.

If the data can be received from the second transmission channel 131 at the point 402, the receiver goes to the point 403, where it fetches data from the second channel. Next, in the point 404, it is checked if the data were received properly. If they were received properly, the receiver moves to the point 405, where the data are descrambled and at the point 406 they are stored in the memory of the receiver. The information, describing the correction method of the description of the audio/video data stream 130 can have a version number and validity time. The descrambling block 135 can store in the memory the version, used at present and receive the next version, validity of which starts after expiry of the current one, which will be stored in the memory in order to enable a smooth change of the method of scrambling information, describing the content of the stream. Next, in the point 407, correction rules, valid in a given time, are fetched. The last point of the procedure is to perform a correction of information about the stream and to monitor any changes of the rules.

If it is not possible to receive the data 131 from the second transmission channel - point 402, or when data were incorrectly received 404, the receiver moves to point 409, where the user is informed about any error occurrence. Next, in the point 410 of the procedure, it is checked if there is a valid, in a given time, version of correction rules of the data, describing the audio/video signal stream 130, stored in the memory. If there is no valid version of the rules in the memory, the procedure moves to the point 411 and ends with an error. In the opposite case, when there is a valid version of the rules in memory, the procedure moves to the point 407.

Conversion of the PID identification numbers to the false ones can be realized with the use of simple mathematical formulas, for example by adding 20 to every number or more advanced conversion algorithms. Fig. 5A shows an example of a packet that contains information about correction of false identification numbers. The packet contains a version number 501A, the time of validity of the packet 502A and a description of the method of assigning PID identification numbers. For example, the 1 503A PID identification number must be changed to 17 504A. In another example of embodiment, shown in Fig, 5B, the packet contains a version 501B, validity time 502B and information that all 503B identification numbers, which were changed in the transmitter (for example all the PIDs indicating PMT tables), should be corrected by adding the number 17 504B. In another example of embodiment, presented in Fig. 5C, the packet contains a version 501C, a validity time 502C and information that all the identification numbers 503C, which were replaced in the transmitter, should be corrected by executing Method_1 504C, which is available in the programmed receiver.

In the audio/video data transmission, according to the invention, in case when one connects to the network a receiver 110, which cannot receive data 131 from the second transmission channel, or has no access to the second transmission channel, it will not be possible to determine, which channels are available in the stream and to switch to one of the channels of the stream. It is a result of the fact that the PAT table, broadcasted in the stream, contains false identification numbers of the PMT tables.

The described above example of the television receiver, in which a solution was applied according to the invention, should be treated as one of the possible applications of the method of protection against unauthorized reception of audio/video data.

## Claims

1. The method of broadcasting radio or television data **characterized in that** there are errors inserted in the transmitter in the data sent to the receivers via the first transmission channel and at the same time there is information created that determines a correction method of the inserted errors, and afterwards, this information is sent to the receivers via the second transmission channel.

2. The method according to claim. 1, **characterized in that** the information that determines the correction method of the inserted errors is sent via a separate, physically independent transmission channel or via an additional logical channel in the first, physical transmission channel.

3. The method according to claim 1, **characterized in that** false PSI data are inserted in the data sent via the first transmission channel.

4. The method according to claim 3, **characterized in that** PSI data, in which errors are inserted, constitute PAT and PMT tables.

5. The method according to claim 4, **characterized in that** there are false PID identification numbers of the PMT tables inserted in the PAT tables or there are false PID identification numbers of the elementary streams, connected with a given PMT table, inserted in the PMT tables.

6. The method according to claim 1, **characterized in that** in the transmitter there is information, with time limited validity, created, which determines the correction method of the inserted errors.

7. The method according to claim 1, **characterized in that** in the transmitter there is information created, which determines the correction method of the inserted errors, that contains a description of the method of assigning the PID identification numbers or information about a need of correcting all the PID identification numbers, that were changed by performing an indicated mathematical operation, using a given value.

8. The method according to claim 1, **characterized in that** in the transmitter there is information created, which determines the correction method of the inserted errors, containing information about a need of correcting all the PID identification numbers, that were changed, by performing indicated method, which is available in the programmed receiver.

9. The method of reception of radio or television data, **characterized in that** in the receiver, the data stream, which contains errors, is received via the first transmission channel and at the same time information is received, defining the correction method of the inserted errors via the second transmission channel.

10. The method according to claim 9, **characterized in that** in case of no access of the receiver to the second channel or incorrect reception of the data from this channel, there is a correction made of the data stream, sent via the first channel, using the information, determining the correction method, stored earlier in the memory.

11. The method according to claim 9, **characterized in that** there is information, received from the second channel, which determines the correction method of data with a time limited validity.

12. The method according to claim 9, **characterized in that** there is a correction of the PSI data made in the receiver.

13. The method according to claim 12, **characterized in that** the PSI data, being corrected in the receiver, constitute PAT and PMT tables.

14. The method according to claim 13, **characterized in that** PSI data, being corrected in the receiver, constitute PID identification numbers of the PMT tables in the PAT table or constitute PID identification numbers of the elementary streams linked to a given PMT table.

15. A transmitter of radio or television data that contains a unit of encoders, a multiplexer or generator of the PSI data, **characterized in that** it is additionally equipped with a unit (104) of the PID server, in which the block (121), generating false PID identification numbers, is linked to the block (122) of communication with the PSI data generator, while the second output of the unit (104) is linked, by means of a block (123), creating information that describes the method of inserted errors correction, to the block (124) that sends data via the second channel, while the output of the block (122) of communication with the PSI data generator is linked to the input of the block (105) of the PSI data generator, the output of which is linked to the first control input of the multiplexer (106) and the output of the block (124) sending data via the second channel is linked, by means of a logical channel (112), to the second control input of the multiplexer (106).

16. Transmitter, according to claim 15, **characterized in that** the unit (104) of the PID server has two additional outputs, one of which is linked, by means of the channel (115), to the digital inputs of the encoders (103a, 103b, 103c) and /or to the input of the multiplexer (106) by means of the additional channel (114), while the second additional output of the block (104) is linked, by means of a separate channel (111), to the receiver (110).

17. The receiver of radio or television data, **characterized in that** its input is composed of two signal receiving blocks, the first of which (132) is assigned to receive radio or television data (130), which contain errors, sent via the first transmission channel, while the other one (133) is assigned to receive the signal sent via the second signal transmission channel (131) that determines the correction method for the data received by the signal receiving block (132), while the block (132) is linked by means of the blocks of the controller (134) and data correction (137) to the input of the signal processing block (138), while the second signal receiving block (133) is linked by means of the correction method analysis block (136) to the second input of the data correction block (137), and furthermore, the controller block (134) is linked to the second inputs of the signal (130) and (131) receiving blocks (132) and (133) and to the second input of the correction method analysis block (136).
